# EUROPEAN PATENT SPECIFICATION

(11) **EP 4 406 840 B1**
(45) Date of publication and mention of the grant of the patent: **25.02.2026**
(21) Application number: 24153652.3
(22) Date of filing: 24.01.2024
(51) Int. Cl.: B64D 13/00, B60H 1/34

(54) **SMART AIR GASPER IN THE PASSENGER SERVICE UNIT**
SMARTER LUFTAUSLASS IN DER PASSAGIERSERVICEEINHEIT
BUSE D'AIR RAFFINÉE DANS L'UNITÉ DE SERVICE DE PASSAGERS

(30) Priority: 24.01.2023 IN 202341004643; 28.03.2023 US 202318191713
(43) Date of publication of application: 31.07.2024
(73) Proprietor: B/E Aerospace, Inc., Winston-Salem, NC 27105 (US)
(72) Inventor: KODATI, Sambasiva Rao, 521333 Kaikalur, Krishna District (IN)
(74) Representative: Dehns

(56) References cited:
- DE-A1- 102020 128 366
- US-A1- 2021 387 737
- US-A1- 2022 057 094
- US-A1- 2022 063 814
- US-B2- 11 267 572
- US-B2- 11 524 794

## Description

### CROSS-REFERENCE TO RELATED APPLICATIONS

This application claims priority to, and the benefit of, India Patent Application No. 202341004643 (DAS CODE: EB85), filed January 24, 2023, and titled "SMART AIR GASPER IN THE PASSENGER SERVICE UNIT," and US application no. 18/191,713.

### FIELD

The present disclosure relates to gaspers for use in aircraft and, more particularly, to gaspers to control airflow in the cabin by enabling direct airflow with an air curtain to reduce virus transmission between passengers.

### BACKGROUND

Passenger aircraft, particularly commercial passenger aircraft, include various features for improving passenger comfort. For example, these aircraft may include reclining seats, seatback infotainment systems, and gaspers. The gaspers direct relatively cool air downward towards the passengers from above the passenger and can be adjusted for both a downward orientation and velocity of exiting air. Direct airflow (i.e., downward airflow) can cause discomfort to passengers. In instances, it is preferred to have distributed or indirect airflow by seated passengers. Gaspers and devices for providing airflow towards passengers are disclosed in DE 10 2020 128366 A1, US 2021/387737 A1, US 2022/063814 A1, US 2022/057094 A1, US 11 267 572 B2 and US 524 794 B2.

Also, direct airflow to passengers can cause increases of transmission of pathogens by more easily spreading water droplets caused by a passenger coughing, sneezing, and/or talking. These water droplets may include pathogens such as bacteria or viruses.

It is desirable to reduce the transmission of pathogens on an aircraft. This may be achieved by reducing the likelihood of the water droplets from one passenger reaching another passenger.

### SUMMARY

In a first aspect of the invention, a gasper module is disclosed as defined in claim 1.

The fan continues ceasing the airflow from the first outlet by a continuous operation of rotation while the second outlet continues to maintain the air curtain.

In various embodiments, the gasper module is further including a plurality of swing blades configured with the first outlet that are adjustable by the passenger to circulate the stream of airflow across an envelope of space across a seat of the passenger.

In various embodiments, the gasper module is further including a solenoid device coupled to the plurality of swing blades of the first outlet that enables a back-and-forth motion of the plurality of swing blades to circulate the stream of airflow across the envelope of space across the seat of the passenger.

In various embodiments, the plurality of swing blades can be positioned by selection at positions in a range of 0 degrees to 180 degrees.

In a further aspect of the invention, a method to manufacture of a gasper module is provided as defined in claim 5.

In various embodiments, the method to manufacture further includes assembling a plurality of swing blades configured with the first outlet that are adjustable by the passenger to circulate the stream of airflow across an envelope of space across a seat of the passenger; and attaching a solenoid device to the plurality of swing blades of the first outlet that enables a back-and-forth motion of the plurality of swing blades to circulate the stream of airflow across the envelope of space across the seat of the passenger.

These features and elements as well as the operation thereof will become more apparent in light of the following description and the accompanying drawings. It should be understood, however, the following description and drawings are intended to be exemplary in nature and non-limiting.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the detailed description and claims when considered in connection with the figures, wherein like numerals may denote like elements in at least a portion of the figures.
FIG. 1 illustrates a diagram of airflow from a gasper module in a cabin of an aircraft in accordance with various embodiments;
FIG. 2 illustrates a passenger service module with a plurality of gaspers in a smart air gasper module in accordance with various embodiments;
FIG. 3 illustrates a gasper module with a set of first outlets configured with fans and a set of second outlets configured to form an air curtain for passenger seats in accordance with various embodiments;
FIG. 4 illustrates a diagram of a gasper module with swing blades in accordance with various embodiments;
FIG. 5 illustrates a gasper module with a plurality of fans in each gasper in accordance with various embodiments;
FIGS. 6A and 6B illustrate swing blades to the gasper in a closed position and in an open position, respectively, in accordance with various embodiments;
FIG. 7 illustrates a diagram of a gasper module coupled to an in-flight entertainment (IFE) control system to control the fan operation and the swing blade operation of the gasper module in accordance with various embodiments; and
FIG. 8 illustrates a flowchart of a manufacturing method of a gasper assembly in accordance with various embodiments.

### DETAILED DESCRIPTION

The detailed description of exemplary embodiments herein makes reference to the accompanying drawings, which show exemplary embodiments by way of illustration. While these exemplary embodiments are described in sufficient detail to enable those skilled in the art to practice the exemplary embodiments of the disclosure, it should be understood that other embodiments may be realized and that logical changes and adaptations in design and construction may be made in accordance with this disclosure and the teachings herein. Thus, the detailed description herein is presented for purposes of illustration only and not limitation. The steps recited in any of the method or process descriptions may be executed in any order and are not necessarily limited to the order presented.

Furthermore, any reference to singular includes plural embodiments, and any reference to more than one component or step may include a singular embodiment or step. Also, any reference to attached, fixed, connected or the like may include permanent, removable, temporary, partial, full and/or any other possible attachment option. Additionally, any reference to without contact (or similar phrases) may also include reduced contact or minimal contact. Surface shading lines may be used throughout the figures to denote different parts but not necessarily to denote the same or different materials.

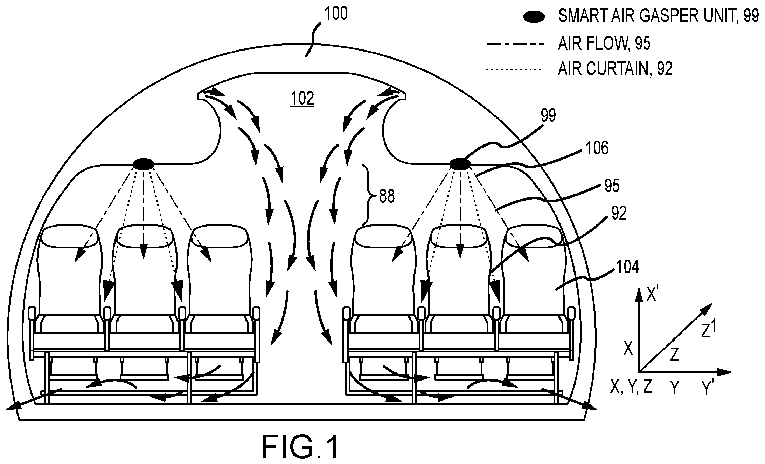

Referring to FIG. 1, FIG. 1 illustrates a diagram of airflow from a gasper module 99 in a cabin 102 of an aircraft 100. The aircraft 100 may include any aircraft such as an airplane, a helicopter, or any other aircraft. The cabin 102 has one or more passenger seat 104 in which one or more passengers may rest. The cabin 102 may include a smart air gasper module ("gasper module") 99 one or more gaspers 106 designed to direct air (e.g., including one or more of filtered air or fresh air from outside of the cabin 102). Although the gasper module 99 is shown in the aircraft cabin 102, one skilled in the art will realize that the gasper module 99 may likewise be installed in a cockpit, lavatory, galley, or other area of an aircraft. A first outlet 95 of the gaspers module 99 (which may be associated with the passenger seat 104) may be designed to direct air towards the passenger seat 104 and another (second) outlet 92 of the gasper module 99 may be designed to form an air curtain to reduce the likelihood of pathogens from a first passenger reaching a second passenger located in the passenger seat 104. In that regard, a beneficial distance 88 between the gasper module 99 and the passenger may provide the greatest reduction in pathogens reaching the passenger. Thus, the gasper module 99 may be positioned to achieve the beneficial distance 88 for any size passenger in the passenger seat 104. As discussed further below, the gasper module 99 may include additional or alternative features that further reduce the transfer of pathogens between passengers in the cabin 102 by enabling direct airflow and an air curtain (or indirect airflow) about the passenger. In various embodiments, the gasper module 99 can be configured for direct airflow in an envelope area (X-Z') to (Y'-Z') that back-and-forth crosses the passenger in the passenger seat in the cabin 102.

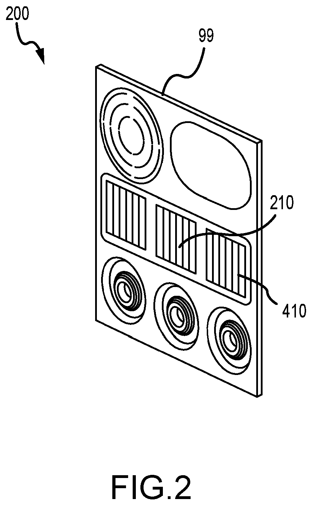

Referring to FIG. 2, FIG. 2 illustrates a smart passenger service module 99 with a plurality of smart air gaspers 210 with swing blades 410 that configures to a legacy passenger service module footprint and is swapped out with a smart air gasper module 99 in accordance with various embodiments. The smart air gasper module (gasper module 99) is sized to confirm to the footprint available in legacy passenger service module.

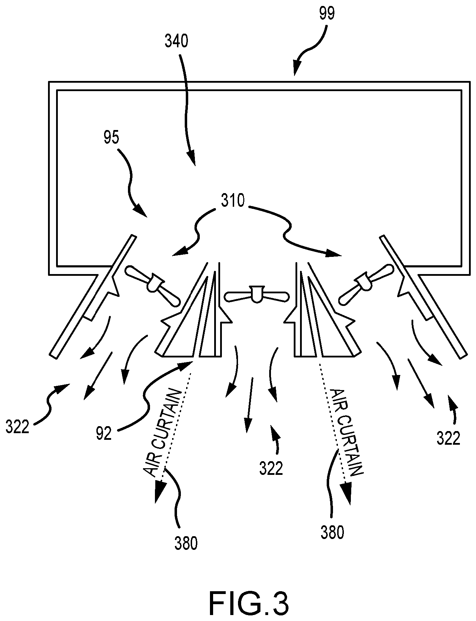

Referring to FIG. 3, FIG. 3 illustrates a gasper module with a set of first outlets configured with fans and a set of second outlets configured to form at least a single air curtain for passenger seats in accordance with various embodiments. FIG. 3 shows a gasper module 99 with a set of first outlets 95 and a second set of outlets 92. In various embodiments, the first set of outlets 95 is associated with a gasper 322 and is each configured with a fan 310 controllable by the passenger inflight entertainment (IFE) control. The passenger via the IFE control can adjust the speed of the fan to control the velocity of the airflow directed at the passenger. In various embodiments, the passenger via IEF control can adjust (via a flow adjuster mechanism) the airflow from the fan 310 rotation through clockwise and counterclockwise rotational operation of the fan 310 to cause the airflow directed at the passenger to be reduced, ceased or increased. The blades of the fan 310 augment the velocity of the airflow (i.e., the outgoing air) from the gasper module 99 where the intake air is received with under pressure. The counterclockwise rotation of the fan 310 prevents flow of the airflow through each inlet 340 or channel associated with each gasper 322 of the pressure air sent from a main blower. The counterclockwise rotation of the fan 310 does not interfere with the airflow of the second outlet 92 and allows the airflow (i.e., the pressured airflow) to be maintained through the second outlet 92 and hence the air curtain is continually formed (even when the airflow through the first outlet is shut off). In this way, the intake air received (i.e., pressurized airflow) continues to flow through the second outlet 92 but is controllably stopped or reduced in flow rate in the first outlet 95 by the fan 310 counter rotation of airflow.

The high-pressure airflow is maintained through the second outlet 92 while the high-pressure airflow is retarded in flow through the first outlet 95 by the counter rotation of the fan 310. The air curtain generated is continuously maintained regardless of forward or reverse airflow caused by the fan 310 through the gasper 322. The air curtain 380 is configured by the second outlet 92 which is angled to enable a protective divider between the passenger seats.

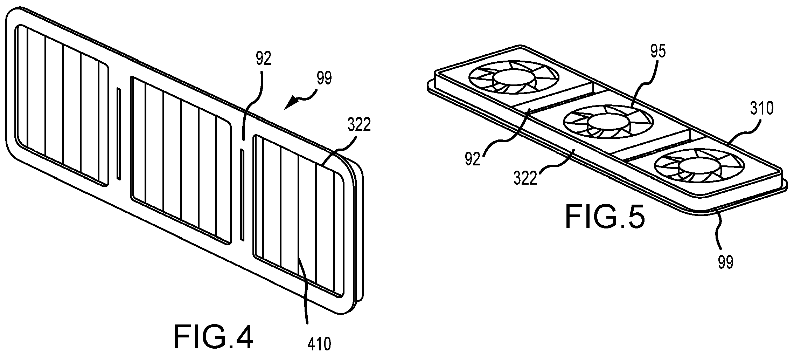

FIG. 4 illustrates a diagram of a gasper module 99 with swing blades 410 in accordance with various embodiments. In FIG. 4, there is shown a gasper module 99 with swing blades 410 that are configured with each gasper 322. The swing blades 410 are adjustable by the IFE control for each passenger seat. In various embodiments, the passenger using different control setting can adjust the direction of the air flow from each gasper 322. The passenger can adjust the angle of the swing blades in a range of 0 degrees to 180 degrees to cause the air flow across an envelope that encompasses the passenger seat. In various embodiments, the passenger using control settings of the IFE can cause the swing blades 410 to rotate dynamically in a back-and-forth motion to cause the airflow to move back-and-forth over the passenger seat. In various embodiments, the passenger using setting of the IFE can cause the swing blades 410 to be statically positioned at a variety of angles to direct the airflow at the passenger in the passenger seat as desired.

FIG. 5 illustrates a gasper module 99 with a plurality of fans 310 in each gasper in accordance with various embodiments. In FIG. 5, the passenger, via the IFE, can adjust the fan 310 in the gasper module 99 to increase or lower the fan 310 speed and corresponding velocity of the airflow through the gasper 322. In various embodiments, the passenger can control the fan 310 to rotate clockwise or counterclockwise to cause increases or decreases or ceasing of the output of airflow from the first outlet 95 of the gasper 322 while maintaining a consistent airflow through the second outlet 92.

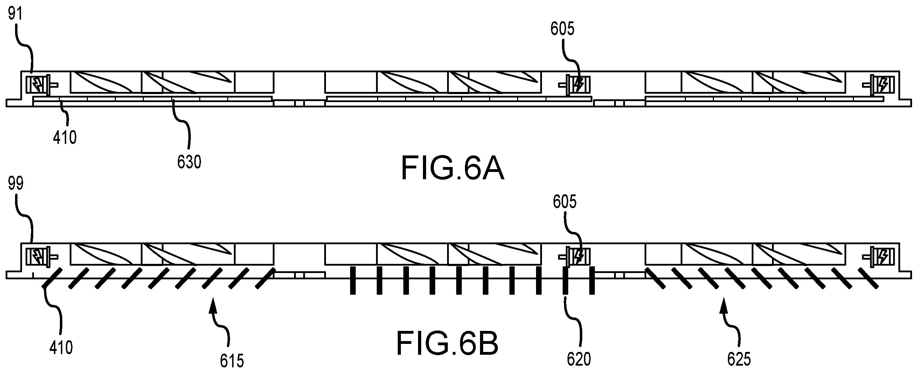

FIGS. 6A and 6B disclose the swing blades to the gasper in a closed position and in an open position in accordance with various embodiments. In FIG. 6A, the swing blades 410 are caused to be closed by the solenoid motor 605 configured with the swing blades 410 which is operated to rotate in a particular direction via control setting of the IFE control by, for example, the passenger. In FIG. 6B the swing blades 410 are caused to be in an open position by operation of the solenoid motor 605 that causes the swing blades 410 to move via rotation to an open position. In various embodiments, the swing blades 410 are positioned at different angles from the front surface 630 For example, the swing blades 410 are configured to stream airflow and a set of angles by changing the position of the swing blades 410 at different angles from in open positions from the front surface 630 that include at least a first angle 615, second angle 620, and third angle 625 that cause different angles of airflow towards the passenger seating area. In various embodiments, if the passenger switches off the direct airflow, then to maintain the in and out airflow speed, the fan may rotate in a counterclockwise direction so that there is not a load applied to the swing blades 410.

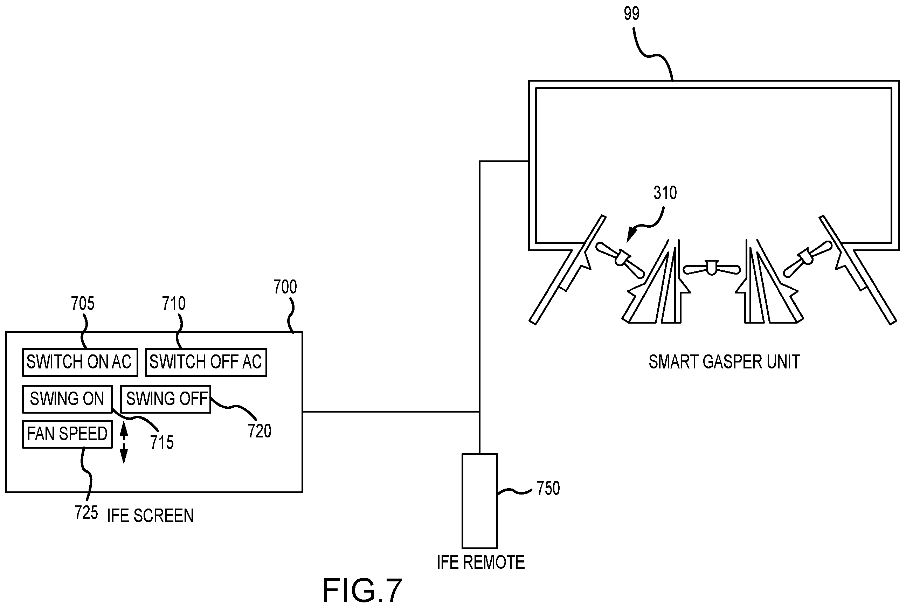

FIG. 7 illustrates a diagram of a gasper module coupled to an in-flight entertainment (IFE) control system to control the fan 310 operation and the swing blade 410 operation of the gasper module in accordance with various embodiments. In FIG. 7, the IFE display 700 is electronically connected to the gasper module 99 and includes a variety of control settings that are touch selective on the display screen. In various embodiments, the gasper module 99 can also be operated by an IFE remote 750. In various embodiments, the passenger using the IFE display 700 or IFE remote 750 can enable switching ON 705 of the air-conditioning (AC) that may be performed by the increasing of a forward airflow by the fan 310 clockwise rotation of blades and opening of the swing blades to direct air flow to the passenger. Other functions that the passenger can perform include switching OFF 710 of the AC that is performed by the counter-clock rotation of the fan 310 blades causing a reverse airflow in the gasper, switching ON 715 of the swing (i.e., back-and-forth) rotation of the swing blades to direct the airflow, switching OFF 720 of the swing blade back and forth rotations, and adjusting the fan speed 725.

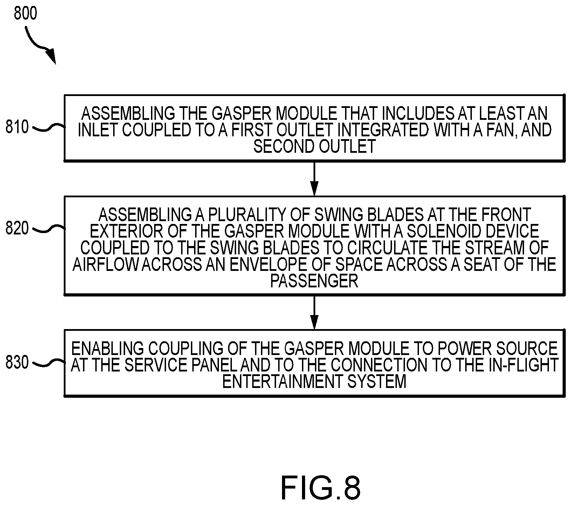

Turning now to FIG. 8, FIG. 8 illustrates a flowchart of a manufacturing method of a gasper assembly in accordance with various embodiments. In FIG. 8, at step 810, the gasper module is assembled by the steps of assembling an inlet to receive intake air, assembling a first outlet to direct a stream of the airflow from the intake air towards a passenger, and assembling a second outlet configured to form an air curtain from the intake air between the passenger receiving a direct stream of airflow and an adjacent passenger. Also, at step 810, the method of manufacture includes assembling a fan with the first outlet to increase a velocity of intake air from the inlet that is streamed in an airflow directed toward the passenger.

At step 820, the method of manufacture includes assembling a plurality of swing blades configured with the first outlet that are adjustable by the passenger to circulate the stream of airflow across an envelope of space across a seat of the passenger, and attaching a solenoid device to the plurality of swing blades of the first outlet that enables a back-and-forth motion of the plurality of swing blades to circulate the stream of airflow across the envelope of space across the seat of the passenger. The plurality of swing blades are attached to the front exterior of the gasper module and each set has its own solenoid device for separate controlling to enable the uniform circulation of airflow by the dynamic back-and-forth motion across the passenger seat. At step 830 the gasper module is assembled with coupling to the connect to the power source available in the service panel that is used for lightening to power the fan and solenoid devices. Also, the gasper module is configured with a connection for coupling to the IFE control system to control the fan speed, and the swing blades.

Benefits and other advantages have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, and any elements that may cause any benefit or advantage to occur or become more pronounced are not to be construed as critical, required, or essential features or elements of the disclosure. The scope of the disclosure is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C.

Systems, methods and apparatus are provided herein. In the detailed description herein, references to "various embodiments," "one embodiment," "an embodiment," "an example embodiment," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the invention in alternative embodiments still falling within the scope of the claims.

## Claims

1. A gasper module for directing airflow from an overhead passenger service unit towards a passenger in an area of an aircraft, the gasper module comprising:
an inlet (340) configured to receive intake air;
a first outlet (95) configured to direct a stream of an airflow from the intake air into the area towards the passenger, and
a second outlet (92) configured to form an air curtain from the intake air between the passenger receiving a direct stream of airflow from the first outlet (95) and an adjacent passenger;
wherein the first outlet (95) comprises a fan (310) to increase a velocity of the stream of the airflow that is directed toward the passenger.; wherein the second outlet (92) comprises an output vent that is configured to direct the air curtain at an angle between a passenger receiving directed airflow and the adjacent passenger.;
wherein the fan is configured to rotate in a clockwise direction and a counterclockwise direction for directing the stream of the airflow from the first outlet to the passenger and for ceasing the stream of the airflow from the first outlet to the passenger; and wherein in response to ceasing the stream of the airflow from the first outlet by the fan to the passenger, the second outlet is configured to continue to maintain the air curtain between the passenger and the adjacent passenger;

2. The gasper module of claim 1, wherein the fan continues ceasing the airflow from the first outlet by a continuous operation of rotation while the second outlet continues to maintain the air curtain.

3. The gasper module of any preceding claim, further comprising:
a plurality of swing blades (410) configured with the first outlet that are adjustable by the passenger to circulate the stream of the airflow across an envelope of space across a seat of the passenger.

4. The gasper module of claim 3, further comprising:
a solenoid device coupled to the plurality of swing blades of the first outlet that enables a back-and-forth motion of the plurality of swing blades to circulate the stream of the airflow across the envelope of space across the seat of the passenger, and optionally wherein the plurality of swing blades can be positioned by selection at positions in a range of 0 degrees to 180 degrees.

5. A method of manufacturing a gasper module for directing airflow from an overhead passenger service unit towards a passenger in an area of an aircraft, the method comprising:
assembling an inlet (340) to receive intake air;
assembling a first outlet (95) to direct a stream of the airflow from the intake air towards the passenger, and
assembling a second outlet (92) configured to form an air curtain from the intake air between the passenger receiving a direct stream of airflow from the first outlet (95) and an adjacent passenger; and further comprising:
assembling a fan (310) with the first outlet to increase a velocity of intake air from the inlet that is streamed in an airflow that is directed in a downward direction toward the passenger, wherein the fan is configured to rotate in a clockwise direction and a counterclockwise direction for directing the stream of the airflow from the first outlet to the passenger and for ceasing the stream of the airflow from the first outlet to the passenger; and wherein in response to ceasing the stream of the airflow from the first outlet by the fan to the passenger, the second outlet is configured to continue to maintain the air curtain between the passenger and the adjacent passenger.

6. The method of claim 5, further comprising:
assembling a plurality of swing blades (410) configured with the first outlet that are adjustable by the passenger to circulate the stream of the airflow across an envelope of space across a seat of the passenger; and
attaching a solenoid device to the plurality of swing blades of the first outlet that enables a back-and-forth motion of the plurality of swing blades to circulate the stream of the airflow across the envelope of space across the seat of the passenger.

## Patentansprüche

1. Belüftungsmodul zum Lenken eines Luftstroms von einer Passagierserviceeinheit zu einem Passagier in einem Bereich eines Luftfahrzeugs, wobei das Belüftungsmodul umfasst:
einen Einlass (340), der zum Empfangen von Zuluft ausgelegt ist;
einen ersten Auslass (95), der zum Lenken eines Stroms eines Luftstroms von der Zuluft in den Bereich zu dem Passagier ausgelegt ist, und
einen zweiten Auslass (92), der zum Bilden eines Luftvorhangs aus der Zuluft zwischen dem Passagier, der einen Direktstrom eines Luftstroms von dem ersten Auslass (95) empfängt, und einem benachbarten Passagier ausgelegt ist;
wobei der erste Auslass (95) einen Lüfter (310) umfasst, um eine Geschwindigkeit des Stroms des Luftstroms, der zu dem Passagier gelenkt wird, zu erhöhen; wobei der zweite Auslass (92) eine Ausströmöffnung umfasst, die zum Lenken des Luftvorhangs in einem Winkel zwischen einem Passagier, der gelenkten Luftstrom empfängt, und dem benachbarten Passagier ausgelegt ist;
wobei der Lüfter zum Drehen in einem Uhrzeigersinn und einem Gegenuhrzeigersinn zum Lenken des Stroms des Luftstroms von dem ersten Auslass zu dem Passagier und zum Unterbrechen des Stroms des Luftstroms von dem ersten Auslass zu dem Passagier ausgelegt ist; und wobei als Reaktion auf das Unterbrechen des Stroms des Luftstroms von dem ersten Auslass durch den Lüfter zu dem Passagier der zweite Auslass zum Fortsetzen des Aufrechterhaltens des Luftvorhangs zwischen dem Passagier und dem benachbarten Passagier ausgelegt ist.

2. Belüftungsmodul nach Anspruch 1, wobei der Lüfter das Unterbrechen des Luftstroms von dem ersten Auslass durch einen Dauerbetrieb der Drehung fortsetzt, während der zweite Auslass den Luftvorhang weiterhin aufrechterhält.

3. Belüftungsmodul nach einem der vorhergehenden Ansprüche, ferner umfassend:
eine Vielzahl von Schwenklamellen (410), die mit dem ersten Auslass ausgelegt sind, die durch den Passagier einstellbar sind, um den Strom des Luftstroms über einen Raumbereich über einen Sitzplatz des Passagiers zirkulieren zu lassen.

4. Belüftungsmodul nach Anspruch 3, ferner umfassend:
eine Elektromagnetvorrichtung, die mit der Vielzahl von Schwenklamellen des ersten Auslasses gekoppelt ist, die eine Hin-und-her-Bewegung der Vielzahl von Schwenklamellen ermöglicht, um den Strom des Luftstroms über den Raumbereich über den Sitzplatz des Passagiers zirkulieren zu lassen, und
optional wobei die Vielzahl von Schwenklamellen durch Auswahl an Positionen in einem Bereich von 0 Grad bis 180 Grad positioniert werden kann.

5. Verfahren zum Herstellen eines Belüftungsmoduls zum Lenken eines Luftstroms von einer Passagierserviceeinheit zu einem Passagier in einem Bereich eines Luftfahrzeugs, wobei das Verfahren umfasst:
Montieren eines Einlasses (340), um Zuluft zu empfangen;
Montieren eines ersten Auslasses (95), um einen Strom des Luftstroms von der Zuluft zu dem Passagier zu lenken, und
Montieren eines zweiten Auslasses (92), der zum Bilden eines Luftvorhangs aus der Zuluft zwischen dem Passagier, der einen Direktstrom eines Luftstroms von dem ersten Auslass (95) empfängt, und einem benachbarten Passagier ausgelegt ist; und ferner umfassend:
Montieren eines Lüfters (310) mit dem ersten Auslass, um eine Geschwindigkeit von Zuluft von dem Einlass zu erhöhen, die in einem Luftstrom geströmt wird, der in einer Abwärtsrichtung zu dem Passagier gelenkt wird, wobei der Lüfter zum Drehen in einem Uhrzeigersinn und einem Gegenuhrzeigersinn zum Lenken des Stroms des Luftstroms von dem ersten Auslass zu dem Passagier und zum Unterbrechen des Stroms des Luftstroms von dem ersten Auslass zu dem Passagier ausgelegt ist; und wobei als Reaktion auf das Unterbrechen des Stroms des Luftstroms von dem ersten Auslass durch den Lüfter zu dem Passagier der zweite Auslass zum Fortsetzen des Aufrechterhaltens des Luftvorhangs zwischen dem Passagier und dem benachbarten Passagier ausgelegt ist.

6. Verfahren nach Anspruch 5, ferner umfassend:
Montieren einer Vielzahl von Schwenklamellen (410), die mit dem ersten Auslass ausgelegt sind, die durch den Passagier einstellbar sind, um den Strom des Luftstroms über einen Raumbereich über einen Sitzplatz des Passagiers zirkulieren zu lassen; und
Befestigen einer Elektromagnetvorrichtung an der Vielzahl von Schwenklamellen des ersten Auslasses, die eine Hin-und-her-Bewegung der Vielzahl von Schwenklamellen ermöglicht, um den Strom des Luftstroms über den Raumbereich über den Sitzplatz des Passagiers zirkulieren zu lassen.

## Revendications

1. Module de buses d'air individuelles destiné à diriger un écoulement d'air à partir d'une unité de service passager supérieure vers un passager dans une zone d'un aéronef, le module de buses d'air individuelles comprenant :
une entrée (340) conçue pour recevoir de l'air d'admission ;
une première sortie (95) conçue pour diriger un flux d'écoulement d'air à partir de l'air d'admission dans la zone vers passager, et
une seconde sortie (92) conçue pour former un rideau d'air à partir de l'air d'admission entre le passager recevant un flux direct d'un écoulement d'air à partir de la première sortie (95) et un passager adjacent ;
dans lequel la première sortie (95) comprend un ventilateur (310) destiné à augmenter une vitesse du flux de l'écoulement d'air qui est dirigé vers le passager ; dans lequel la seconde sortie (92) comprend un évent de sortie conçu pour diriger le rideau d'air selon un angle entre un passager recevant un écoulement d'air dirigé et le passager adjacent ;
dans lequel le ventilateur est conçu pour tourner dans un sens horaire et dans un sens antihoraire pour diriger le flux de l'écoulement d'air à partir de la première sortie vers le passager et pour interrompre le flux de l'écoulement d'air à partir de la première sortie vers le passager ; et dans lequel, en réponse à l'interruption du flux de l'écoulement d'air à partir de la première sortie vers le passager par le ventilateur, la seconde sortie est conçue pour continuer à maintenir le rideau d'air entre le passager et le passager adjacent.

2. Module de buses d'air individuelles selon la revendication 1, dans lequel le ventilateur continue à interrompre l'écoulement d'air à partir de la première sortie par une opération de rotation continue tandis que la seconde sortie continue à maintenir le rideau d'air.

3. Module de buses d'air individuelles selon l'une quelconque revendication précédente, comprenant en outre :
une pluralité de pales oscillantes (410) conçues avec la première sortie qui sont réglables par le passager pour faire circuler le flux de l'écoulement d'air à travers une enveloppe d'espace au-dessus d'un siège du passager.

4. Module de buses d'air individuelles selon la revendication 3, comprenant en outre :
un dispositif solénoïde accouplé à la pluralité de pales oscillantes de la première sortie qui permet un mouvement de va-et-vient de la pluralité de pales oscillantes afin de faire circuler le flux de l'écoulement d'air à travers l'enveloppe d'espace au-dessus du siège du passager, et optionnellement,
dans lequel la pluralité de pales oscillantes peuvent être positionnées par sélection au niveau de positions dans une plage allant de 0 degré à 180 degrés.

5. Procédé de fabrication d'un module de buses d'air individuelles destiné à diriger un écoulement d'air à partir d'une unité de service passager supérieure vers un passager dans une zone d'un aéronef, le procédé comprenant :
l'assemblage d'une entrée (340) afin de recevoir de l'air d'admission ;
l'assemblage d'une première sortie (95) afin de diriger un flux de l'écoulement d'air à partir de l'air d'admission vers le passager, et
l'assemblage d'une seconde sortie (92) conçue pour former un rideau d'air à partir de l'air d'admission entre le passager recevant un flux direct d'un écoulement d'air à partir de la première sortie (95) et un passager adjacent ; comprenant en outre :
l'assemblage d'un ventilateur (310) avec la première sortie afin d'augmenter une vitesse de l'air d'admission à partir de l'entrée qui est acheminé dans un écoulement d'air qui est dirigé dans un sens descendant vers le passager, dans lequel le ventilateur est conçu pour tourner dans un sens horaire et dans un sens antihoraire pour diriger le flux de l'écoulement d'air à partir de la première sortie vers le passager et pour interrompre le flux de l'écoulement d'air à partir de la première sortie vers le passager ; et dans lequel, en réponse à l'interruption du flux de l'écoulement d'air à partir de la première sortie vers le passager par le ventilateur, la seconde sortie est conçue pour continuer à maintenir le rideau d'air entre le passager et le passager adjacent.

6. Procédé selon la revendication 5, comprenant en outre :
l'assemblage d'une pluralité de pales oscillantes (410) conçues avec la première sortie qui sont réglables par le passager pour faire circuler le flux de l'écoulement d'air à travers une enveloppe d'espace au-dessus d'un siège du passager ; et
la fixation d'un dispositif solénoïde accouplé à la pluralité de pales oscillantes de la première sortie qui permet un mouvement de va-et-vient de la pluralité de pales oscillantes afin de faire circuler le flux de l'écoulement d'air à travers l'enveloppe d'espace au-dessus du siège du passager.
